# EUROPEAN PATENT SPECIFICATION

(11) **EP 2 527 179 B1**
(45) Date of publication and mention of the grant of the patent: **26.02.2014**
(21) Application number: 12168597.8
(22) Date of filing: 21.05.2012
(51) Int. Cl.: B60K 13/02, B62M 7/12, F02M 35/04

(54) **Scooter type motorcycle**
Motorrad vom Rollertyp
Motocyclette de type scooter

(30) Priority: 27.05.2011 JP 2011119345
(43) Date of publication of application: 28.11.2012
(73) Proprietor: Yamaha Hatsudoki Kabushiki Kaisha, Shizuoka-ken Shizuoka 438-8501 (JP)
(72) Inventor: Tanaka, Akira, Iwata-shi, Shizuoka 438-8501 (JP); Yamamoto, Kyoichi, Iwata-shi, Shizuoka 438-8501 (JP); Haraki, Ryosuke, Iwata-shi, Shizuoka 438-8501 (JP)
(74) Representative: Grünecker, Kinkeldey, Stockmair & Schwanhäusser

(56) References cited:
- JP-A- 10 231 759
- JP-A- 59 077 924
- JP-A- 60 191 821
- US-A1- 2006 124 379

## Description

### TECHNICAL FIELD

The present invention relates to scooter type motorcycles.

### BACKGROUND ART

Conventionally, scooter type motorcycles equipped with an engine unit incorporating a V-belt type continuously variable transmission have been known. The V-belt type continuously variable transmission has the characteristic that it tends to generate heat due to the friction between a belt and a pulley and consequently it tends to become hot. For this reason, the V-belt type continuously variable transmission is conventionally cooled by air.

In the scooter type motorcycle disclosed in JP H08-318887 A (hereinafter referred to as "Literature 1"), a transmission case is disposed on the left of a crankcase, and a V-belt type continuously variable transmission is accommodated in the transmission case. The just-mentioned scooter type motorcycle has an engine air cleaner and a V-belt cooling air cleaner. Both of the air cleaners are integrated with each other and disposed above the transmission case.

The engine unit of scooter type motorcycles is what is called a unit swing type engine unit, which swings relative to the body frame. In the scooter type motorcycle disclosed in Literature 1, the engine air cleaner and the V-belt cooling air cleaner are integrated with each other, so both of the air cleaners integrally swing relative to the body frame. This makes the structure simpler in comparison with the case where the V-belt cooling air cleaner is non-swingably fixed to the body frame.

However, since the position of the intake port of the V-belt cooling air cleaner is low, the dust, muddy water, and the like that are swirled up from the road surface are apt to enter the V-belt cooling air cleaner. In view of this problem, in the just-mentioned scooter type motorcycle, the entire side portions of the engine air cleaner and the V-belt cooling air cleaner are covered by a vehicle body cover. By positioning the intake ports of both of the air cleaners inside the vehicle body cover, the just-mentioned scooter type motorcycle inhibits the dust, muddy water, and the like from entering into both of the air cleaners. Nevertheless, because the vehicle body cover covers a majority of the side portions of both of the air cleaners and the transmission case, the width of the motorcycle inevitably becomes large.

JP 2007-314165 A (hereinafter referred to as "Literature 2") discloses a scooter type motorcycle in which the transmission case is not covered by a vehicle body cover but is exposed on its sides. In this scooter type motorcycle, a duct extending upward is connected to the transmission case. An intake port is formed in the upper end portion of the duct, and a side of the upper portion of the duct is covered by the vehicle body cover. Thus, the intake port is disposed at a high position, and moreover, it is disposed inside the vehicle body cover. As a result, the dust, the muddy water, and the like that are swirled up from the road surface do not easily get into the intake port.

JP 59077924, which is considered as the closest prior art, discloses a scooter type motorcycle according to the preamble of claim 1.

### SUMMARY OF INVENTION

### TECHNICAL PROBLEM

However, in the scooter type motorcycle disclosed in Literature 2, the vehicle body cover is disposed above the transmission case when viewed from side, and the duct extends from the transmission case to the inside of the vehicle body cover. Since the duct is long in this way, the duct is instable as it is. In order to support the duct stably, it is necessary to fix an upper portion of the duct to the body frame. However, although the upper portion of the duct is non-swingable relative to the body frame, the lower end portion of the duct can swing relative to the body frame because it is connected to the transmission case. In order to absorb the swing, the duct needs to be provided with a bellows portion that easily deforms. As a consequence, a problem with the scooter type motorcycle disclosed in Literature 2 is that the structure for guiding air to the V-belt type continuously variable transmission becomes complicated.

The present invention has been accomplished in view of the foregoing and other problems, and it is an object of the invention to make it possible, with a simple structure, to inhibit the width of the scooter type motorcycle from increasing and at the same time inhibit the entry of dust, muddy water, and the like into the transmission case in a scooter type motorcycle having a unit swing type engine unit.

### SOLUTION TO PROBLEM

A scooter type motorcycle according to the present invention comprises a body frame, an engine unit, a vehicle body cover, and an air cleaner. The engine unit comprises an engine case accommodating a crankshaft, a transmission case being disposed at a side of the engine case and having an upper wall and a belt chamber formed therein, a V-belt type continuously variable transmission disposed in the belt chamber. The engine unit is swingably supported by the body frame. At least a portion of the vehicle body cover is disposed at a side of the body frame, and the vehicle body cover is located above the transmission case when viewed from side. The air cleaner is disposed above the engine unit and is swingable relative to the body frame together with the engine unit. The transmission case has a duct unit comprising a downstream end portion communicating with the belt chamber and an upstream end portion covered by the air cleaner so as to overlap with the air cleaner when viewed from side. The air cleaner has: a vertical wall for dividing an interior of the air cleaner into a transmission air intake chamber accommodating the upstream end portion of the duct unit and an engine air intake chamber located more rearward than the transmission air intake chamber; a transmission air intake port opening downward, opposing the upper wall of the transmission case and communicating with the transmission air intake chamber; an engine air intake port opening downward, opposing the upper wall of the transmission case and communicating with the engine air intake chamber; and a discharge port communicating with the engine air intake chamber, for discharging air supplied to the engine unit. At least one of the engine case, the transmission case, and the air cleaner forms a labyrinth structure defining a meandering passage at a side of the transmission air intake port and/or the engine air intake port.

### ADVANTAGEOUS EFFECTS OF INVENTION

The present invention makes it possible, with a simple structure, to inhibit the width of a scooter type motorcycle from increasing and at the same time inhibit the entry of dust, muddy water, and the like into the transmission case.

### BRIEF DESCRIPTION OF DRAWINGS

Fig. 1 is a side view of a scooter type motorcycle;
Fig. 2 is a side view illustrating an engine unit and an air cleaner;
Fig. 3 is a perspective view illustrating the engine unit and the air cleaner;
Fig. 4 is a cross-sectional view illustrating the engine unit;
Fig. 5A is a vertical cross-sectional view illustrating the air cleaner and a transmission case;
Fig. 5B is an enlarged view of a duct and its adjacent portion shown in Fig. 5A;
Fig. 6A is a cross-sectional view taken along line VI-VI in Fig. 5A;
Fig. 6B is an enlarged view of a duct and its adjacent portion shown in Fig. 6A;
Fig. 7 is a cross-sectional view taken along line VII-VII in Fig. 5A;
Fig. 8 is a cross-sectional view taken along line VIII-VIII in Fig. 5A; and
Fig. 9 is a cross-sectional view taken along line IX-IX in Fig. 5A.

### DESCRIPTION OF EMBODIMENTS

Hereinbelow, one embodiment of the present invention will be described. In the following description, the terms "front," "rear," "left," and "right" respectively refer to front, rear, left, and right as defined based on the perspective of the rider of a motorcycle 1, unless specifically indicated otherwise. Reference characters F, Re, L, and R in the drawings indicate front, rear, left, and R, respectively.

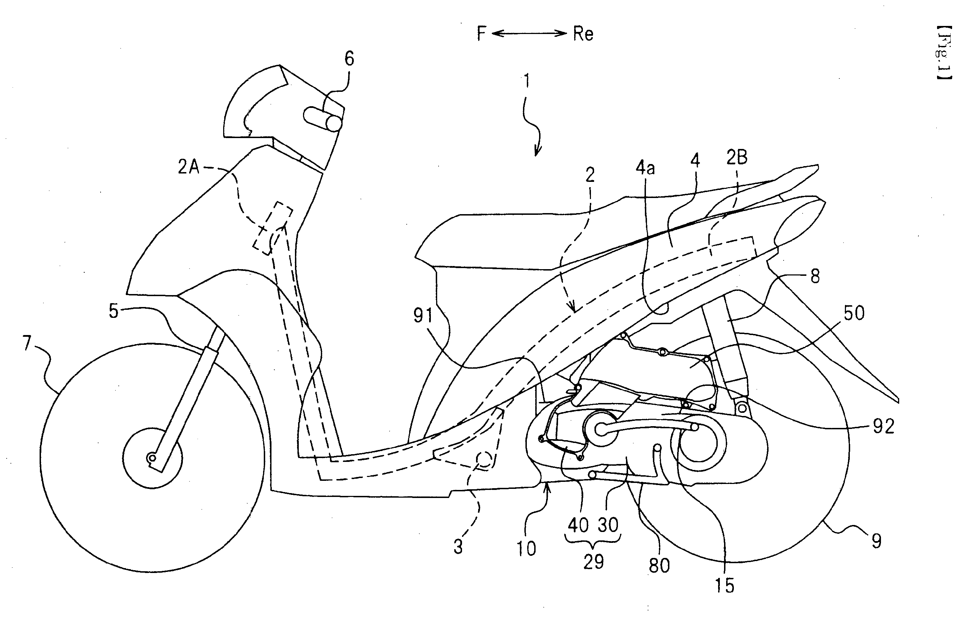

As illustrated in Fig. 1, a scooter type motorcycle 1 according to the present embodiment has a body frame 2, an engine unit 10 supported swingably on the body frame 2 by a pivot shaft 3, a vehicle body cover 4 at least a portion of which is disposed on a side of the body frame 2, and an air cleaner 50 that is swingable together with the engine unit 10 relative to the body frame 2.

First, the overall structure of the motorcycle 1 will be described briefly. The body frame 2 has a head pipe 2A. A front fork 5 is supported by the head pipe 2A. A handle bar 6 is fitted to an upper portion of the front fork 5. A front wheel 7 is supported at the lower end of the front fork 5. The body frame 2 has a pair of left and right side frames 2B. The side frame 2B extends obliquely upward and rearward, when viewed from side. A cushion unit 8 spans between a rear portion of the engine unit 10 and a rear portion of the side frame 2B. A rear wheel 9 is supported at a rear end portion of the engine unit 10. The engine unit 10 has a transmission case 29. A kick shaft 15 is fitted to a side portion of the transmission case 29.

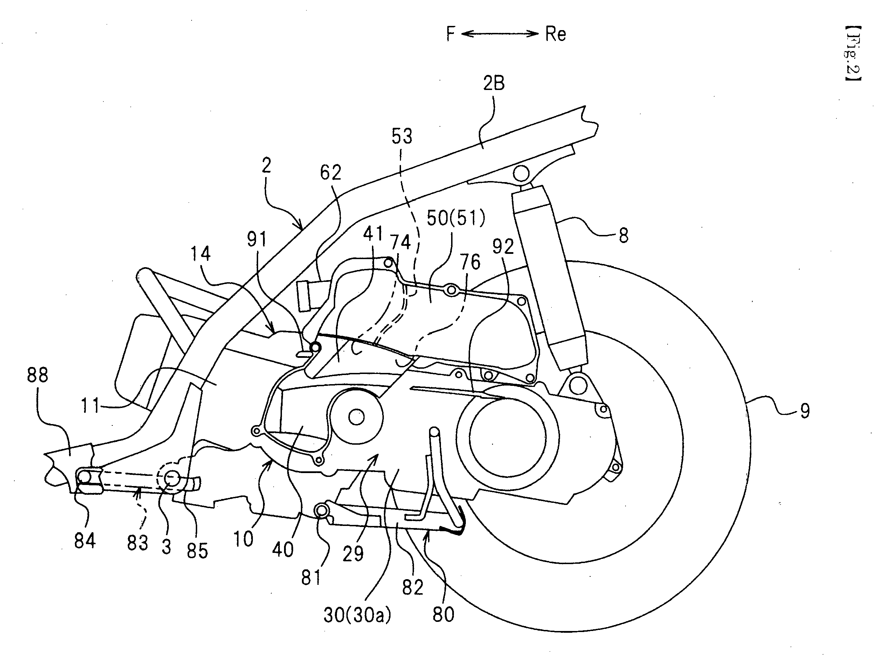

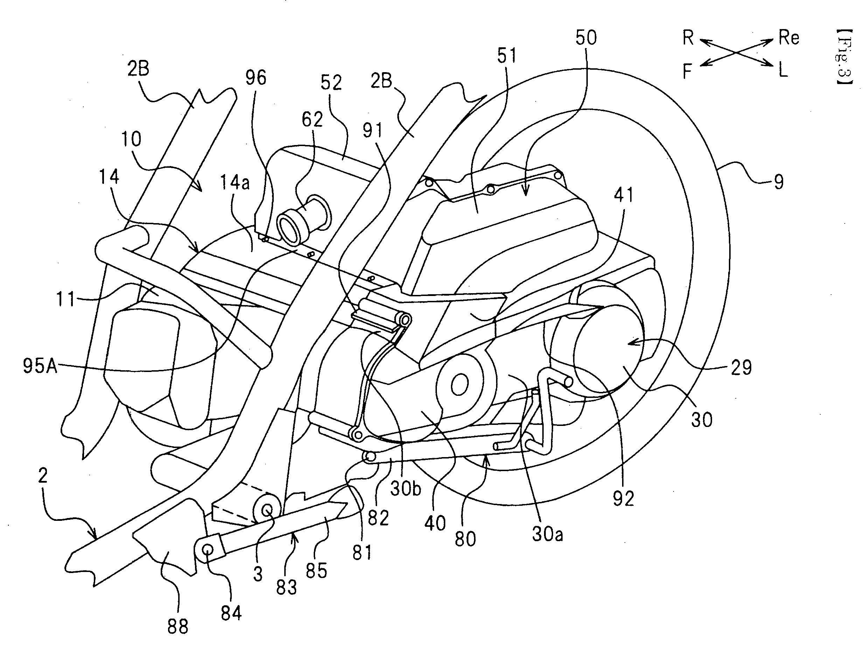

As illustrated in Figs. 2 and 3, the motorcycle 1 has a center stand 80. The center stand 80 has a shaft portion 81 rotatably fitted to the engine unit 10, and a pair of left and right leg portions 82. The center stand 80 can pivot about the shaft portion 81. When the center stand 80 is put upright, the rear wheel 9 comes off the ground, so that the motorcycle 1 is supported by the center stand 80. When the center stand 80 is rotated in such a manner that the leg portions 82 extend rearward, the rear wheel 9 is brought into contact with the ground, so that the motorcycle 1 is allowed to run.

As illustrated in Figs. 2 and 3, a side stand 83 (not shown in Fig. 1) is fitted to a portion of the body frame 2 that is further forward than the center stand 80, via a bracket 88. It should be noted that in the present specification, the term "fitted" is used to describe not only the case in which a part is fitted directly to another part but also the case in which a part is fitted indirectly to another part, unless specifically indicated otherwise. For example, the side stand 83, which is indirectly fitted to the body frame 2 via the bracket 88, is described as being fitted to the body frame 2.

The side stand 83 has a shaft portion 84 rotatably fitted to the body frame 2, and a leg portion 85. The side stand 83 can pivot about the shaft portion 84. When the side stand 83 is put upright, the motorcycle 1 is supported by the side stand 83 in such a posture as to lean leftward. When the side stand 83 is rotated in such a manner that the leg portion 85 extends rearward, the motorcycle 1 is allowed to run.

When viewed from side, a portion of the center stand 80 is disposed below the transmission case 29. When viewed from side, the center stand 80 is disposed below the air cleaner 50. The side stand 83 is disposed further frontward than the center stand 80. When viewed from side, the side stand 83 is disposed further frontward than the transmission case 29. The side stand 83 is disposed at a location higher than the center stand 80. The side stand 83 is disposed at substantially the same level as a location higher than a lower end portion of the transmission case 29.

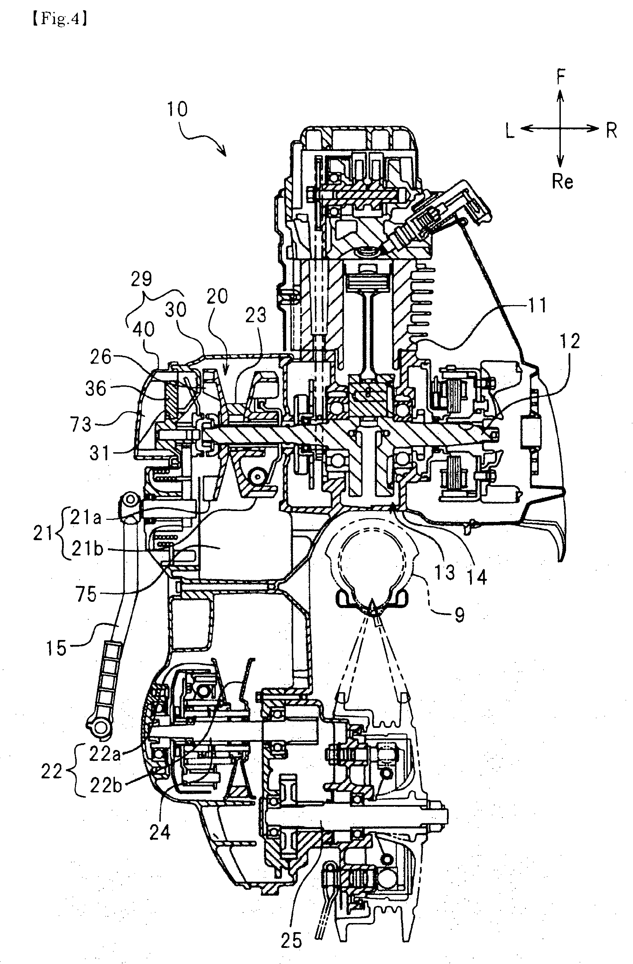

Next, the structure of the engine unit 10 will be described. As illustrated in Fig. 4, the engine unit 10 has a crankcase 14 for accommodating a crankshaft 12, a V-belt type continuously variable transmission 20 (hereinafter referred to as "CVT"), and the transmission case 29 for accommodating the CVT 20. A cylinder 11 is secured to a front portion of the crankcase 14. The drive force from the crankshaft 12 is allowed to be transmitted to the rear wheel 9 via the CVT 20.

Although the specific structure of the crankcase 14 is not particularly limited in any way, the crankcase 14 herein is composed of a plurality of components. It should be noted, however, that the crankcase 14 may be composed of a single component. For convenience in illustration, the case for accommodating the crankshaft 12 and the case for accommodating the CVT 20 are herein referred to as the crankcase 14 and the transmission case 29, respectively. The cases 14 and 29 need not be independent components from each other, and it is possible that one component may serve as a portion or the entirety of the two cases 14 and 29. For example, a portion of the component of the crankcase 14 may serve as a portion of the transmission case 29.

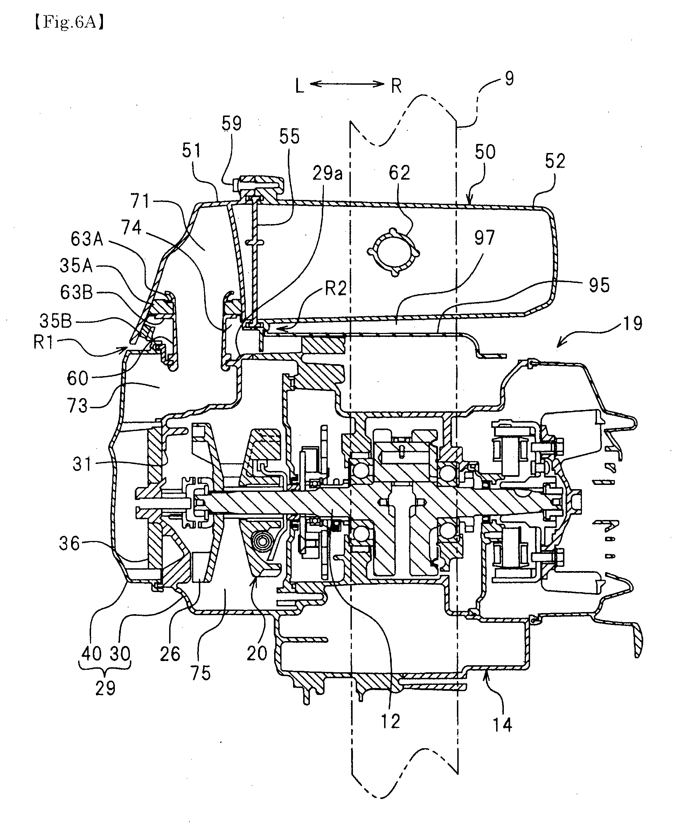

Although the details will be described later, the engine unit 10 has, for example, a flap 95 (see Fig. 6A) made of rubber and fitted outside the crankcase 14, in addition to the crankcase 14 and the transmission case 29. Herein, the component that forms the outer shape of the engine unit 10 other than the transmission case 29 is referred to as an engine case 19. Each of the crankcase 14 and the flap 95 is one of the elements of the engine case 19.

The CVT 20 has a first pulley 21, which is a driving pulley, and a second pulley 22, which is a driven pulley. The V-belt 23 is wrapped around the first pulley 21 and the second pulley 22. Fig. 4 depicts the state in which the transmission ratios are different between a front portion and a rear portion of the first pulley 21 (in other words, the widths of the belt grooves are different). The second pulley 22 has the same configuration.

The first pulley 21 has a pulley member 21a and a pulley member 21b. The pulley member 21a and the pulley member 21b are fitted to a left end portion of the crankshaft 12. The first pulley 21 rotates with the crankshaft 12. The pulley member 21a is located more leftward, that is, vehicle's widthwise outward, than the pulley member 21b. The pulley member 21a is immovable in an axial direction, while the pulley member 21b is movable in an axial direction. The pulley member 21a and the pulley member 21b form a V-shaped belt groove for supporting the V-belt 23. Blades 26 are formed on a left portion of the pulley member 21a. The blades 26 form a fan for sucking air.

The second pulley 22 has a pulley member 22a and a pulley member 22b. The pulley member 22a and the pulley member 22b are fitted to a main shaft 24. The second pulley 22 rotates with the main shaft 24. The pulley member 22a is located more leftward, that is, vehicle's widthwise outward, than the pulley member 22b. The pulley member 22a is movable in an axial direction, while the pulley member 22b is immovable in an axial direction. The pulley member 22a and the pulley member 22b form a V-shaped belt groove for supporting the V-belt 23. The main shaft 24 is coupled to a rear wheel shaft 25 via a gear mechanism, which is not shown in the drawings.

The transmission case 29 disposed on the left of the crankcase 14. The transmission case 29 has a case main body 30 secured to the crankcase 14, a cover 40 secured to the case main body 30, and a later-described duct unit 60. The case main body 30 accommodates the CVT 20. In other words, the case main body 30 accommodates the first pulley 21, the second pulley 22, and the V-belt 23. An opening 31 is formed on the left of the first pulley 21 in the case main body 30. The opening 31 is positioned on the left of the blades 26. The cover 40 is fitted to a front portion of the case main body 30 so that it covers the opening 31.

As illustrated in Fig. 2, the air cleaner 50 is disposed above the engine unit 10. The air cleaner 50 is fixed to the engine unit 10 but is not fixed to the body frame 2. As well as the engine unit 10, the air cleaner 50 is swingable relative to the body frame 2.

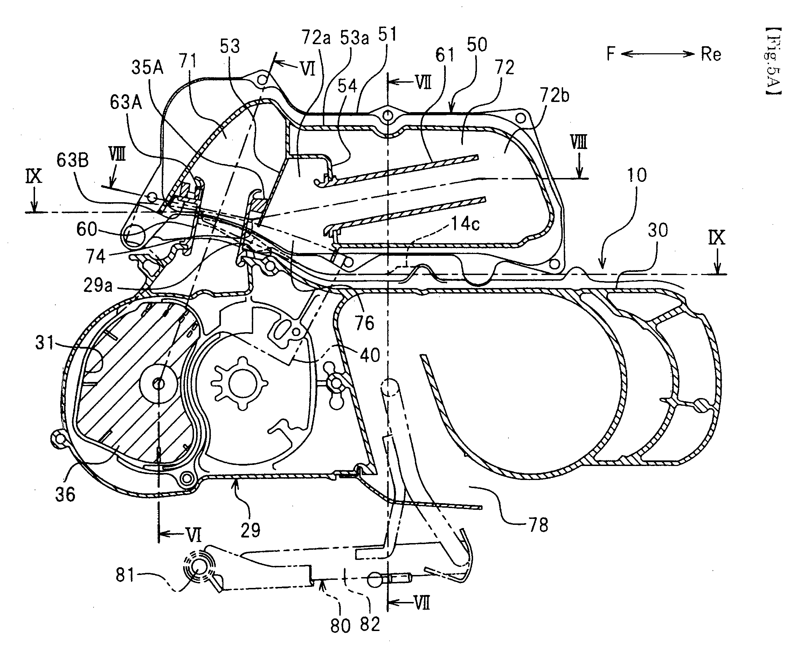

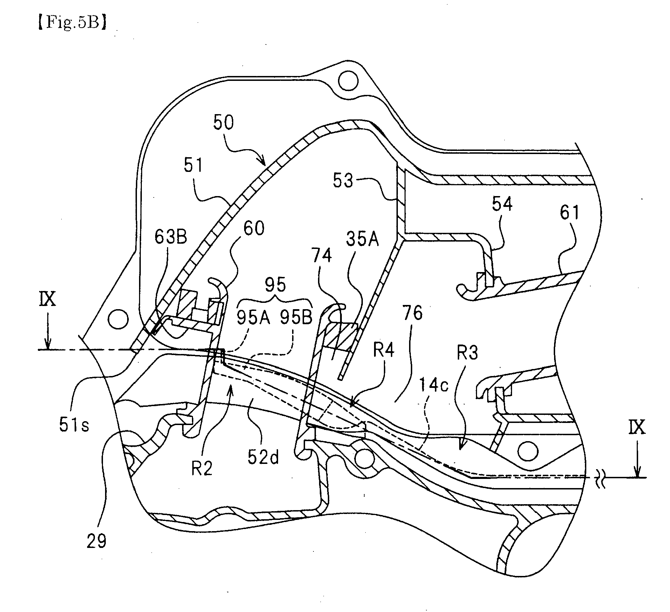

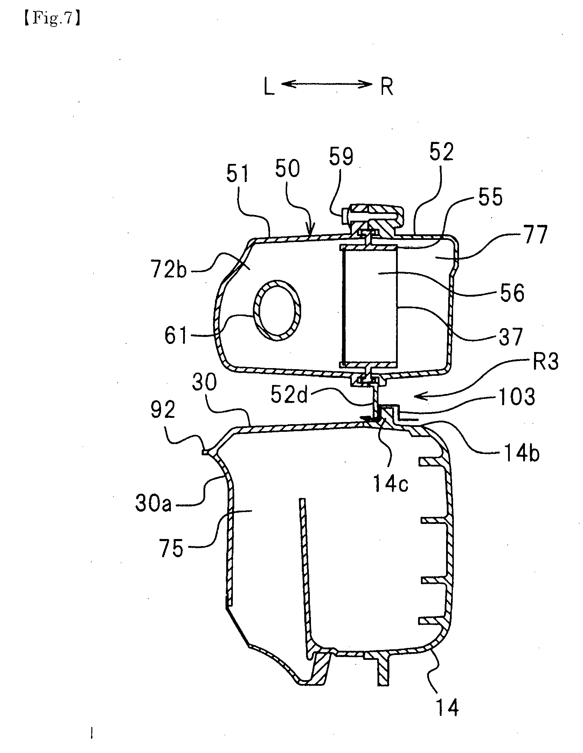

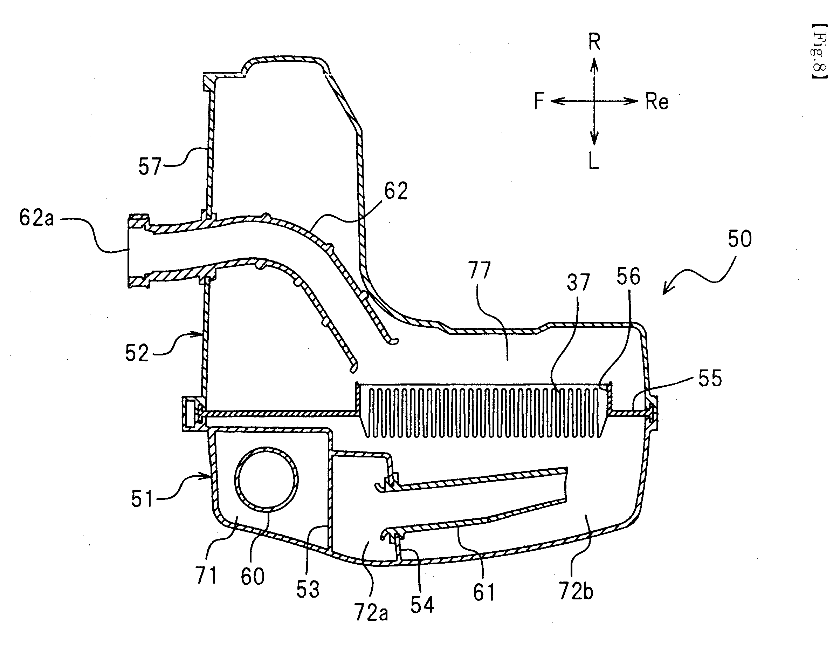

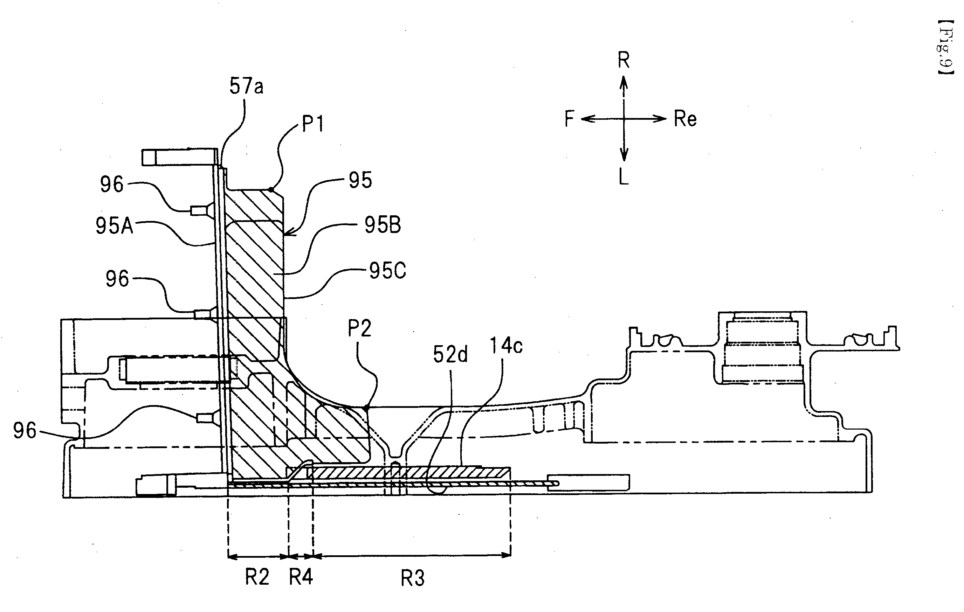

Next, the structures of the transmission case 29 and the air cleaner 50 will be described in detail. Fig. 5A is a vertical cross-sectional view illustrating the interior of the transmission case 29 and the air cleaner 50. Fig. 6A shows a cross-sectional view taken along line VI-VI in Fig. 5A, Fig. 7 shows a cross-sectional view taken along line VII-VII in Fig. 5A, Fig. 8 shows a cross-sectional view taken along line VIII-VIII in Fig. 5A, and Fig. 9 shows a cross-sectional view taken along line IX-IX in Fig. 5A (for line IX-IX, see also Fig. 5B).

As illustrated in Fig. 6A, the air cleaner 50 has a first case 51 located above the transmission case 29, and a second case 52 located above the engine case 19. The second case 52 is disposed on the right of the first case 51. The second case 52 is assembled using a bolt 59 or the like so that it can be detached from the right of the first case 51. It should be noted, however, that the way and the position of coupling the first case 51 and the second case 52 to each other are not particularly limited. For example, the position of coupling the first case 51 and the second case 52 to each other may be more rightward than the position of coupling them in the present embodiment. The joint face between the first case 51 and the second case 52 is not limited in any way. The just-mentioned joint face may be a vertical plane orthogonal to a horizontal direction, or may be other planes.

As illustrated in Fig. 5A, a vertical wall 53 extending downward from an upper wall 53a is provided in the first case 51. The interior of the first case 51 is partitioned into an intake chamber 71, which is one example of transmission air intake chamber, and an intake chamber 72, which is one example of engine air intake chamber, by the vertical wall 53. The intake chamber 72 is formed at the rear of the intake chamber 71. The vertical wall 53 is provided more forward than the front-to-rear-wise middle position of the first case 51.

As illustrated in Fig. 6A, the first case 51 and the cover 40 are connected to each other via the duct unit 60. The duct unit 60 composes a portion of the transmission case 29. The first case 51 is formed in a lid shape such that its front portion opens downward, and it covers the top of the duct unit 60. As clearly seen from Fig. 5A, an upper portion of the duct unit 60 is disposed at a position overlapping the first case 51, when viewed from side. In other words, when viewed from side, the upper portion of the duct unit 60 overlaps with the air cleaner 50 and also overlaps with the intake chamber 71. As illustrated in Fig. 6A, an intake chamber 73 is formed inside the cover 40 and outside the case main body 30. The intake chamber 71 and the intake chamber 73 are allowed to communicate with each other through the duct unit 60.

In the present embodiment, the upper end of the duct unit 60 is an upstream end portion while the lower end thereof is a downstream end portion. Herein, the upstream end portion means an end portion that is located the most upstream side of the flow direction of the air flowing through the duct unit 60. The downstream end portion means an end portion that is located the most downstream side of the flow direction of the air flowing through the duct unit 60. In the present embodiment, the duct unit 60 is formed in substantially a straight cylindrical shape. However, it is also possible to form the duct unit 60 into a curved tubular shape so that the upstream end portion and the downstream end portion are disposed between the upper end portion and the lower end portion of the duct unit 60. Alternatively, for example, an opening may be formed in a side face of the duct unit 60, and the opening may be the upstream end portion or the downstream end portion.

The upper portion of the duct unit 60 widens upwardly to form a funnel shape. Flanges 63A and 63B protruding radially outward are formed more downward than the upper end of the duct unit 60. The flange 63A is formed in a ring shape. The flange 63B extends frontward (see Fig. 5A). Although the two flanges 63A and 63B that are spaced apart from each other vertically are provided herein, the number of the flanges is not particularly limited.

As illustrated in Fig. 5B, a lower portion 51s of the first case 51 is spaced apart upward from the transmission case 29 so that the air can be supplied from the front to the front portion of the duct unit 60 when the motorcycle 1 is running. In other words, the air cleaner 50 and the transmission case 29 are spaced apart vertically from each other in front of the duct unit 60.

As illustrated in Fig. 6A, an intake port 74 opening downward is formed in the lower portion of the first case 51. The intake port 74 is an intake port communicating with the intake chamber 71 which is the transmission air intake chamber; in other words, it is one example of the transmission air intake port. The intake port 74 is partitioned by the outer peripheral surface of the duct unit 60 and the inner surface of the first case 51. Herein, the intake port 74 is formed around the entire circumference of the duct unit 60. In other words, the intake port 74 is formed over the front, the left, the rear, and the right of the duct unit 60. However, the intake port 74 may be formed in only a portion of the surrounding region around the duct unit 60. The intake port 74 faces an upper wall 29a of the transmission case 29. Specifically, the intake port 74 faces the upper wall 29a of at least one of the case main body 30 and the cover 40. A filter 35A is provided for the intake port 74. The filter 35A covers the surrounding region of the duct unit 60. The filter 35A allows passage of the air but inhibits passage of dust, muddy water, and the like. The filter 35A is formed of a porous material such as sponge. The filter 35A is, however, not always necessary and may be omitted when appropriate.

A belt chamber 75 accommodating the CVT 20 is formed in the interior of the case main body 30. The intake chamber 73 and the belt chamber 75 are in communication with each other through the opening 31. A filter 36 that covers the opening 31 is provided in the interior of the cover 40. Like the filter 35A, the filter 36 is formed of a porous material such as sponge. The filter 36 inhibits the entry of dust, muddy water, and the like into the belt chamber 75. The filter 36 is, however, not always necessary and may be omitted when appropriate.

As illustrated in Fig. 5A, a vertical wall 54 extending rearward from the vertical wall 53 and then bending downward is formed in the first case 51. The intake chamber 72 is divided into an intake chamber 72a and an intake chamber 72b by the vertical wall 54. A duct 61 is fitted to the vertical wall 54, and the duct 61 penetrates through the vertical wall 54. The intake chamber 72a and the intake chamber 72b are in communication with each other through the duct 61. An intake port 76 opening downward is formed more rearward than the vertical wall 53 and more frontward than the vertical wall 54. The intake port 76 is an intake port communicating with the intake chamber 72 that is one example of the engine air intake chamber, and it is one example of the engine air intake port. The intake port 76 faces the upper wall 29a of the transmission case 29. Specifically, the intake port 76 faces the upper wall 29a of at least one of the case main body 30 and the cover 40.

As illustrated in Fig. 7 and 8, a partition plate 55 is provided between the first case 51 and the second case 52. An opening 56 is formed in the partition plate 55. An intake chamber 77 formed in the second case 52 is in communication with the intake chamber 72b through the opening 56. A filter 37 is fitted to the opening 56 of the partition plate 55. The filter 37 cleans the air flowing from the intake chamber 72b toward the intake chamber 77. As described previously, the second case 52 can be detached from the right side of the first case 51. When the second case 52 is removed rightward, the partition plate 55 is exposed outside. By removing the second case 52, the filter 37 can be replaced easily.

As illustrated in Fig. 8, a duct 62 is fitted to a front wall 57 of the second case 52. A rear end portion of the duct 62 opens in the intake chamber 77. A front portion of the duct 62 protrudes frontward from the front wall 57. A discharge port 62a is formed in a front end portion of the duct 62. The discharge port 62a is connected to an air-intake pipe (not shown) of an engine 13. An intake passage for supplying the air to the engine 13 is formed by the intake chamber 72 (i.e., the intake chambers 72a and 72b), the intake chamber 77, the duct 62, and the air-intake pipe.

As illustrated in Fig. 6A, a flap 95 made of rubber is disposed above the crankcase 14, The flap 95 is formed of a thin-wall plate-shaped member. At least a portion of the flap 95 is disposed between the crankcase 14 and the second case 52 of the air cleaner 50. A rib 57a (see Fig. 9) extending downward is formed in a lower portion of the front wall 57 of the second case 52. As illustrated in Fig. 9, the flap 95 has a vertical plate 95A (see also Fig. 4) fitted to a front face of the rib 57a, and a side plate 95B extending substantially rearward from the lower end portion of the vertical plate 95A and having substantially an L-shape when viewed in plan. Three protrusions 96 lined up side to side are formed on the rib 57a of the second case 52. The vertical plate 95A is secured by inserting the protrusions 96 therein. As illustrated in Fig. 9, a rear edge portion 95C of the side plate 95B is along the shape of the crankcase 14. The portion of the rear edge portion 95C from point P1 to point P2 (that is, the portion thereof on the right of point P1 and on the left of point P2) is in contact with the crankcase 14. The flap 95 prevents the entry of muddy water or the like into the space between the second case 52 and the crankcase 14 from at least the portion from point P1 to point P2.

When the motorcycle 1 is running, there may be cases where dust, muddy water, or the like is splashed up to the motorcycle 1 from the road surface. In addition, in the rain, there may be cases where rainwater falls onto the motorcycle 1. In the present embodiment, labyrinth structures as will be described below are provided in at least a portion of the surrounding region of the intake port 74 and the intake port 76, in order to inhibit dust, muddy water, and the like from entering from the intake port 74 and the intake port 76. Next, the labyrinth structures are described in detail. Note that the labyrinth structure means a structure in which a meandering passage is formed. With the labyrinth structure, the passage is meandering, so that the entry of dust, muddy water, and the like can be inhibited effectively while the air is allowed to pass.

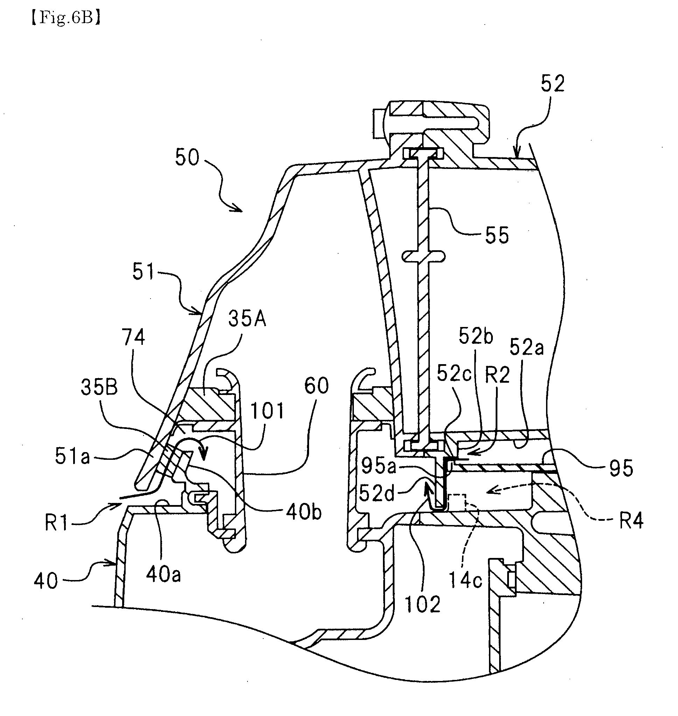

First, referring to Fig. 6B, a labyrinth structure R1 formed on the left of the duct unit 60 will be described. As illustrated in Fig. 6B, a projecting wall 40b projecting upward is provided on an upper wall 40a of the cover 40 that opposes the intake port 74. The projecting wall 40b is disposed on the right of a lower end portion 51a of the first case 51. The lower end portion 51a of the first case 51 and the projecting wall 40b overlap with each other when viewed from side. The projecting wall 40b is covered by the first case 51. A meandering passage 101, which is directed to the right, is then bent upward, and is further bent downward from above, is formed below the intake port 74. The labyrinth structure R1 is formed by the lower end portion 51a of the first case 51, and the upper wall 40a and the projecting wall 40b of the cover 40, which form the meandering passage 101.

In the present embodiment, a sponge 35B as a sealing member formed of a porous material is provided between the projecting wall 40b and the lower end portion 51a of the first case 51. In other words, the sponge 35B is disposed in a portion of the meandering passage 101. The sponge 35B is, however, not always necessary and may be omitted when appropriate.

Next, a labyrinth structure R2 formed on the right of the duct unit 60 will be described. As illustrated in Fig. 6B, the second case 52 of the air cleaner 50 is provided with a vertical wall 52b extending downward from a lower wall 52a, a side wall 52c extending leftward from a lower portion of the vertical wall 52b, and a rib 52d extending downward from the side wall 52c. The left end portion of the flap 95 faces the side wall 52c and the rib 52d. A protruding portion 95a protruding upward is formed at the left end portion of the flap 95. However, it is possible that a protruding portion protruding downward may be formed in place of the protruding portion 95a protruding upward, or in addition to the protruding portion 95a protruding upward. The protruding portion 95a is not always necessary, and it is possible to omit the protruding portion 95a. The left end portion (the protruding portion 95a herein) of the flap 95 is located below the side wall 52c and on the right of the rib 52d of the second case 52. The side wall 52c, the rib 52d, and the flap 95 form a meandering passage 102, which leads leftward first, then bends downward, and then bends upward from below. By the side wall 52c, the rib 52d, and the flap 95, which form the meandering passage 102, the labyrinth structure R2 is formed on the right of the duct unit 60. However, the components that form the labyrinth structure R2 are not particularly limited, and it is possible to use other components than the flap 95.

The labyrinth structure R1 or R2 as described above may be formed at any location around the duct unit 60. The labyrinth structure R1 or R2 may be formed in front of the duct unit 60.

In the present embodiment, a labyrinth structure R3 is also formed on the right of the intake port 76, in addition to the labyrinth structure R1 on the left of the intake port 74 and the labyrinth structure R2 on the right of the intake port 74. Next, the labyrinth structure R3 formed on the right of the duct unit 76 will be described.

As illustrated in Fig. 7, a rib 14c protruding upward is formed on an upper wall 14b of the crankcase 14. Herein, the rib 14c is disposed on the right of the rib 52d of the second case 52. However, the rib 14c may be disposed on the left of the rib 52d of the second case 52. In addition, the rib 14c may be provided both on the left and on the right of the rib 52d of the second case 52. The rib 14c and the rib 52d are disposed at such a location that they overlap with each other, viewed from side. The rib 14c and the rib 52d form a meandering passage 103, which leads leftward first, then bends upward, then leads leftward, thereafter further bends downward, and then bends leftward. The labyrinth structure R3 is formed on the right of the intake port 76 by the rib 14c of the crankcase 14 and the rib 52d of the second case 52, which form the meandering passage 103.

Fig. 9 shows the positional relationship between the rib 52d of the second case 52, the flap 95, and the rib 14c of the crankcase 14 along the front-rear direction. The flap 95 is provided on the right of the front portion of the rib 52d, so that the above-described labyrinth structure R2 is formed. The rib 14c is provided on the right of the rear portion of the rib 52d, so that the above-described labyrinth structure R3 is formed. A labyrinth structure R4 in which both the flap 95 and the rib 14c are disposed on the right of the rib 52d (see Fig. 6B, in which the rib 14c is shown by the virtual line) is formed between the labyrinth structure R2 and the labyrinth structure R3.

As illustrated in Fig. 5B, the flap 95 extends rearward from a location near the front end portion of the duct unit 60 to a location near the front end portion of the intake port 76, when viewed from side. As illustrated in Fig. 5A, the rib 14c of the crankcase 14 extends rearward from a location directly below the front end portion of the intake port 76 to a location near the mid portion of the transmission case 29, when viewed from side. As illustrated in Fig. 5B, the labyrinth structure R2 is formed approximately below the intake port 74, when viewed from side. The labyrinth structure R4 is formed approximately at the rear of the intake port 74 and below the front portion of the intake port 76, when viewed from side. The labyrinth structure R3 is formed approximately below the intake port 76 and below a portion of the air cleaner 50 that is more rearward than the intake port 76, when viewed from side.

The air cleaner 50 serves the role of guiding the outside air into the engine 13 and also the role of guiding the outside air to the CVT 20. The air cleaner 50 forms a portion of the intake passage for guiding the outside air into the engine 13 and also forms a portion of the air passage for guiding outside air into the CVT 20. Next, the air flow in the air cleaner 50 and so forth will be described.

First, the air flow from the air cleaner 50 to the engine 13 will be described. The air outside the air cleaner 50 is sucked into the intake port 76 through the labyrinth structures R3 and R4. As described previously, dust, muddy water, and the like are inhibited from passing through the labyrinth structures R3 and R4. Even if dust, muddy water, and the like enter therein with the air, the dust, muddy water, and the like are separated from the air in the labyrinth structures R3 and R4. As a result, only the air is sucked into the intake port 76. The air sucked from the intake port 76 into the intake chamber 72a passes through the duct 61 and flows into the intake chamber 72b. The air in the intake chamber 72b is cleaned by passing through the filter 37, and then flows into the intake chamber 77. The air in the intake chamber 77 is guided through the duct 62 to an air-intake pipe (not shown), and is supplied to the engine 13.

Next, the air flow in the CVT 20 will be described. As the first pulley 21 rotates in association with rotation of the crankshaft 12, the blades 26 (see Fig. 6A) rotate. Accordingly, a suction force that guides the air into the belt chamber 75 is generated. The air outside the air cleaner 50 is sucked into the intake port 74 through the labyrinth structures R1, R2, and R3. Dust, muddy water, and the like are inhibited from passing through the labyrinth structures R1, R2, and R3. Therefore, even if dust, muddy water, and the like enter therein with the air, the dust, muddy water, and the like are separated from the air. The air from which dust, muddy water, and the like are separated is sucked into the intake port 74.

The just-mentioned air flows through the intake port 74 into the intake chamber 71. At this time, the air is cleaned by the filter 35A. The air in the intake chamber 71 flows through the duct unit 60 into the intake chamber 73. The air in the intake chamber 73 is further cleaned by passing through the filter 36, and is then guided into the belt chamber 75. The air in the belt chamber 75 flows through the surrounding regions around the first pulley 21, the second pulley 22, and the V-belt 23 and thereby cools the first pulley 21, the second pulley 22, and the V-belt 23. As illustrated in Fig. 5A, an exhaust port 78 is formed in a rear portion of the case main body 30. The air that has cooled the CVT 20 is exhausted from the exhaust port 78.

As described previously, the entry of dust, muddy water, and the like from the intake port 74 and the intake port 76 is inhibited by the labyrinth structures R1, R2, R3, and R4, and so forth. When the motorcycle passes through a puddle, water is splashed up by the front wheel 7, and the splash of the water tends to scatter obliquely upward and rearward. The scattered water hits the side stand 83 and the center stand 80 and is scattered further, so the scattered water may reach the region near the intake port 74 and the intake port 76. The labyrinth structure R1 effectively inhibits the scattered water from flowing into the intake port 74 from the left. The labyrinth structures R2, R3, and R4 effectively inhibit the scattered water from flowing into the intake port 74 and the intake port 76 from the right. The motorcycle 1 according to the present embodiment is provided with a rib 91 and a rib 92 for repelling water, which will be described hereinbelow, in order to further inhibit the entry of muddy water and the like from the intake port 74 and the intake port 76.

As illustrated in Fig. 3, the rib 91 protruding frontward is formed in a front wall 30b of the case main body 30 of the transmission case 29. The rib 91 is disposed at a location in front of and obliquely below the intake port 74 (see Fig. 2). The rib 91 is disposed between the side stand 83 and the intake port 74 so that it can effectively inhibit the water splash scattered by the side stand 83 from entering the intake port 74. The rib 91 extends in a horizontal direction. It should be noted, however, that the shape and dimensions, for example, of the rib 91 are not particularly limited. The rib 91 may be extended from the front wall 30b of the transmission case 29 to a front wall 14a of the crankcase 14.

In addition, the rib 92 protruding leftward is formed on a side wall 30a of the case main body 30 of the transmission case 29. As illustrated in Fig. 2, the rib 92 is disposed at a location at the rear of and obliquely below the intake port 76, when viewed from side. It should be noted, however, that the rib 92 may be extended to a location below the intake port 76, when viewed from side. The rib 92 may be disposed below the intake port 76, when viewed from side. The rib 92 is disposed at a location lower than the intake port 76 but higher than the center stand 80 when viewed from side so that it can effectively inhibit the water splash scattered by the center stand 80 from entering the intake port 76. The rib 92 extends in substantially a horizontal direction. It should be noted, however, that the shape and dimensions, for example, of the rib 92 are not particularly limited.

As illustrated in Fig. 1, in the motorcycle 1, the vehicle body cover 4 is located above the transmission case 29, when viewed from side. When viewed from side, a lower edge 4a of the vehicle body cover 4 is spaced upward from the transmission case 29. Since the vehicle body cover 4 does not cover the side of the transmission case 29, the size of the vehicle body cover 4 need not be made larger sideward. As a result, the motorcycle 1 makes it possible to reduce the width of the vehicle.

Nevertheless, merely arranging the vehicle body cover 4 above the transmission case 29 when viewed from side may make the overall structure of the intake passage for guiding the air to the engine 13 and the air passage for guiding the cooling air to the CVT 20 complicated. However, in the present embodiment, the air passage for guiding the air to the CVT 20 is formed by a portion of the first case 51 (i.e., the portion that forms the intake chamber 71), the duct unit 60, and the cover 40, as illustrated in Figs. 5A and 6A. The air cleaner 50 forms not only the intake passage for guiding the air to the engine 13 but also a portion of the air passage for guiding the air to the CVT 20. Moreover, the air cleaner 50 is not fixed to the body frame 2, so it can swing integrally with the engine unit 10 relative to the body frame 2. Thus, because the air cleaner 50 guides the air to both the engine 13 and the CVT 20 and is swingable relative to the body frame 2, it is unnecessary to provide a special structure for absorbing swinging (such as the bellows portion disclosed in Literature 2 described above). The air cleaner 50 can be formed by a simple structure.

According to the above-described structure, the side of the air cleaner 50 and the side of the transmission case 29 are not covered by the vehicle body cover 4, as illustrated in Fig. 1. The vehicle body cover 4 is not disposed on the side of the air cleaner 50 and the side of the transmission case 29. The positions of the intake port 74 and the intake port 76 of the air cleaner 50 are relatively low (see Fig. 2). For this reason, dust, muddy water, and the like may be apt to enter the air cleaner 50 if no preventive measures are taken. However, according to the present embodiment, the intake port 74 and the intake port 76 face the upper wall 29a of the transmission case 29 (see Fig. 5A). Moreover, the labyrinth structures R1, R2, R3, and R4 are provided at the sides of the intake port 74 and the intake port 76. As a result, the dust, muddy water, and the like that are swirled up from the road surface or the rear wheel 9 do not easily get into the intake port 74 or the intake port 76.

Thus, the motorcycle 1 makes it possible, with a simple structure, to inhibit the width of a scooter type motorcycle from increasing and at the same time inhibit the entry of dust, muddy water, and the like into the air cleaner 50. Although the motorcycle 1 is a scooter type motorcycle that has a unit swing type engine unit 10, it can inhibit dust, muddy water, and the like from entering while the duct unit 60 for guiding the air to the transmission case 29 is allowed to swing within the range of unit swing (in other words, without any trouble within the range in which the engine unit 10 swings).

As illustrated in Fig. 6A, the labyrinth structure R2 is formed between the rear wheel 9 and the duct unit 60 when viewed from the rear of the vehicle. A space 97 between the air cleaner 50 and the engine case 19, i.e., the space 97 between the flap 95 and the second case 52 of the air cleaner 50, is allowed to communicate with the intake port 74 through the meandering passage 102, which is formed by the labyrinth structure R2 (see Fig. 6B), There is a risk that the dust, muddy water, and the like that are splashed up from the rear wheel 9 may enter this space 97, but the entry of the dust, muddy water, and the like from the space 97 into the intake port 74 is inhibited sufficiently by the labyrinth structure R2.

As illustrated in Fig. 2, the rib 92 protruding sideward is provided on the side wall 30a of the case main body 30 of the transmission case 29. The rib 92 is disposed at a lower position than the intake port 74 and the intake port 76. The muddy water and the like swirled up from the road surface toward the intake port 74 and the intake port 76 can be blocked by the rib 92. As a result, the entry of the muddy water and the like into the intake port 74 and the intake port 76 can be prevented further.

As illustrated in Fig. 2, the rib 92 is disposed at a position lower than the intake port 74 and the intake port 76 but higher than the center stand 80, when viewed from side. Even if the water splashed up from the road surface is scattered by the center stand 80, the water is prevented from moving toward the intake port 74 and the intake port 76 by the rib 92. As a result, the entry of water into the intake port 74 and the intake port 76 can be prevented sufficiently.

As illustrated in Figs. 5A and 5B, the air cleaner 50 and the transmission case 29 are spaced apart vertically from each other in front of the duct unit 60 so that air can be supplied from front to a front portion of the duct unit 60 in association with running of the motorcycle 1. Herein, a lower portion of the first case 51 and an upper portion of the cover 40 are spaced apart vertically from each other in front of the duct unit 60. The air can be allowed to flow into the intake port 74 more efficiently than the structure in which the front of the duct unit 60 is closed so that the air does not hit the front portion of the duct unit 60.

As illustrated in Fig. 3, the rib 91 protruding frontward is provided on the front wall 30b of the case main body 30 of the transmission case 29. The rib 91 is disposed at a lower position than the intake port 74. As a result, the entry of water from the intake port 74 can be inhibited.

As illustrated in Fig. 2, the rib 91 is disposed between the side stand 83 and the intake port 74. Even if the water splashed up from the road surface is scattered by the side stand 83, the water is prevented from moving toward the intake port 74 by the rib 91. As a result, the entry of water from the intake port 74 can be inhibited more effectively.

It should be noted that the location of the rib 91 is not limited to the front wall 30b of the case main body 30. The rib 91 may be formed, for example, on a front wall 14a of the crankcase 14 (see Fig. 3). Alternatively, the rib 91 may be formed on both the front wall of the transmission case 29 and the front wall of the crankcase 14.

As illustrated in Fig. 5B, the front portion of the duct unit 60 is provided with a flange 63B protruding radially outward. As a result, the entry of the muddy water and the like from the front of the duct unit 60 into the intake chamber 71 can be prevented. In addition, the muddy water and the like adhering to the outer peripheral surface of the duct unit 60 are less likely to move upward along the outer peripheral surface and are less likely to enter the intake chamber 71.

As illustrated in Fig. 6B, at least a portion of the space between the first case 51 of the air cleaner 50 and the cover 40 of the transmission case 29 is sealed by the sponge 35B as a porous material. As a result, while the air can be sucked through the gap between the first case 51 and the cover 40, the entry of dust, muddy water, and the like through the gap can be inhibited sufficiently.

As illustrated in Fig. 2, the intake port 74 and the intake port 76 are located above the center stand 80 when viewed from side. Nevertheless, as described previously, dust, muddy water, and the like are unlikely to be sucked from the intake port 74 and the intake port 76 in the motorcycle 1. Although the intake port 74, the intake port 76, and the center stand 80 are in the positional relationship as described above, the muddy water and the like scattered by the center stand 80 is unlikely to enter the intake chamber 71 and the intake chamber 72.

As illustrated in Fig. 5A, the filter 35A is provided at the intake port 74. With the filter 35A, dust, muddy water, and the like can be inhibited from entering the intake chamber 71 through the intake port 74 more effectively.

As illustrated in Fig. 6A, the transmission case 29 has the case main body 30 and the cover 40. The cover 40 is connected to the first case 51 of the air cleaner 50 via the duct unit 60 and is fitted to a side of the case main body 30 so as to cover the opening 31. By combining the case main body 30 and the cover 40 with each other in this way, the air passage for guiding the air to the CVT 20 can be formed in a simple and compact manner.

As illustrated in Fig. 5A, the length of the cover 40 along the front-rear direction is longer than the length of the intake chamber 71 along the front-rear direction. The cover 40 has a wall 41 disposed at a side of the intake port 74 and the intake port 76 (see Fig. 3). With the cover 40, not only the intake port 74 but also a portion of the surrounding region of the intake port 76 can be covered. With the motorcycle 1, the intake port 74 and the intake port 76 which dust, muddy water, and the like are unlikely to enter can be easily formed using the cover 40.

As illustrated in Fig. 8, the filter 37 is provided between the first case 51 and the second case 52. The second case 52 is detachable from the first case 51 from a side. By removing the second case 52 from the first case 51, the filter 37 can be replaced easily.

In the present embodiment, the duct unit 60 is a separate component from the cover 40, and the duct unit 60 is fitted to the cover 40. However, the duct unit 60 and the cover 40 may be formed integrally with each other. In other words, the duct unit 60 and the cover 40 may be formed of one component.

In the present embodiment, the labyrinth structures R1 through R4 are formed by the air cleaner 50, the cover 40, and the engine case 19. However, another labyrinth structure may be formed at a side of the intake port 74 by the duct unit 60, or by the duct unit 60 and another component. The labyrinth structure located at a side of the intake port 74 and/or a side of the intake port 76 may be formed by either one of the engine case 19, the transmission case 29, and the air cleaner 50 or combinations of two or more of them. For example, any one of the engine case 19, the transmission case 29, and the air cleaner 50 may be provided with a meandering through-hole that is located at a side of the intake port 74 and/or a side of the intake port 76 and is provided with an inlet and an outlet. In that case, the portion defining the through-hole forms the labyrinth structure.

In the present embodiment, the downstream end portion of the duct unit 60 is fitted to an upper portion of the cover 40. However, for example, it is possible that an opening may be formed in a side portion of the cover 40, and the downstream end portion of the duct unit 60 may be fitted to the opening.

The rib 91 for repelling water may not be formed on the transmission case 29 itself, but a component having the rib 91 may be fitted to the transmission case 29, for example. In addition, the rib 91 may be formed on a portion other than the transmission case 29. The same applies to the rib 92. The rib 92 may not be formed on the transmission case 29 itself, but a component having the rib 92 may be fitted to the transmission case 29, for example. The rib 92 may be formed on a portion other than the transmission case 29.

### REFERENCE SIGNS LIST

1 -- Scooter type motorcycle
2 -- Body frame
4 -- Vehicle body cover
10 -- Engine unit
13 -- Engine
19 -- Engine case
20 -- V-belt type continuously variable transmission
29 -- Transmission case
30 -- Case main body
40 -- Cover
50 -- Air cleaner
51 -- First case
52 -- Second case
53 -- Vertical wall
60 -- Duct
62 -- Discharge port
71 -- Intake chamber (transmission air intake chamber)
72 -- Intake chamber (engine air intake chamber)
74 -- Intake port (transmission air intake port)
76 -- Intake port (engine air intake port)
R1, R2. R3, R4 -- Labyrinth structure

## Claims

1. A scooter type motorcycle (1) comprising:
a body frame (2);
an engine unit (10) comprising an engine case (19) accommodating a crankshaft (12), a transmission case (29) being disposed at a side of the engine case (19) and having an upper wall (29a) and a belt chamber (75) formed therein, a V-belt type continuously variable transmission (20) disposed in the belt chamber (75), the engine unit (10) swingably supported by the body frame (2);
a vehicle body cover (4) at least a portion of which being disposed at a side of the body frame (2), the vehicle body cover (4) located above the transmission case (29) when viewed from a side; and
an air cleaner (50) disposed above the engine unit (10) and being swingable relative to the body frame (2) together with the engine unit (10), wherein
the transmission case (29) has a duct unit (60) comprising a downstream end portion communicating with the belt chamber (75) and an upstream end portion covered by the air cleaner (50) so as to overlap with the air cleaner (50) when viewed from a side;
the air cleaner (50) has: a vertical wall (53) for dividing an interior of the air cleaner (50) into a transmission air intake chamber (71) accommodating the upstream end portion of the duct unit (60) and an engine air intake chamber (72) located more rearward than the transmission air intake chamber (71); a transmission air intake port (74) opening downward, opposing the upper wall (29a) of the transmission case (29) and communicating with the transmission air intake chamber (71); an engine air intake port (76) opening downward, opposing the upper wall (29a) of the transmission case (29) and communicating with the engine air intake chamber (72); and a discharge port (62a) communicating with the engine air intake chamber (72), for discharging air supplied to the engine unit (10); **characterised by**
at least one of the engine case (19), the transmission case (29), and the air cleaner (50) forms a labyrinth structure (R₁, R₂, R₃, R₄) defining a meandering passage (101, 102, 103) at a side of the transmission air intake port (74) and/or the engine air intake port (76).

2. The scooter type motorcycle (1) according to claim 1, further comprising:
a rear wheel (9) supported at a rear portion of the engine unit (10), and wherein:
the labyrinth structure (R₂) is formed between the rear wheel (9) and the duct unit (60), when viewed from the rear of the motorcycle (1); and
a space (97) between the air cleaner (50) and the engine case (19) is in communication with the transmission air intake port (74) through the meandering passage (102).

3. The scooter type motorcycle (1) according to claim 1, further comprising a rib (92) protruding sideward from a portion of a side wall (30a) of the transmission case (29) that is lower than the transmission air intake port (74).

4. The scooter type motorcycle (1) according to claim 1, wherein the air cleaner (50) and the transmission case (29) are spaced apart vertically from each other in front of the duct unit (60) so that air can be supplied from front to a front portion of the duct unit (60) in association with running of the scooter type motorcycle (1).

5. The scooter type motorcycle (1) according to claim 1, further comprising a rib (91) protruding frontward from a portion of a front wall (306) of the engine case (19) or the transmission case (29) that is lower than the transmission air intake port (74).

6. The scooter type motorcycle (1) according to claim 1, wherein:
a front portion of the duct unit (60) is spaced apart from an inner surface of the air cleaner (50); and
the front portion of the duct unit (60) is provided with a flange (63A, 63B) protruding radially outward.

7. The scooter type motorcycle (1) according to claim 1, wherein at least a portion of a space between the air cleaner (50) and the transmission case (29) is sealed by a porous material.

8. The scooter type motorcycle (1) according to claim 1, further comprising a stand (83), being pivotably supported by the engine unit (10) and at least a portion of which being located below the air cleaner (50) when viewed from a side.

9. The scooter type motorcycle (1) according to claim 1, further comprising a filter (35B) provided at the transmission air intake port (74).

10. The scooter type motorcycle (1) according to claim 1, wherein:
the V-belt type continuously variable transmission (20) has a fan for sucking air from a side;
the transmission case (29) has a case main body (30) having an opening (31) located at a side of the fan and accommodating the V-belt type continuously variable transmission (20), and a cover (40) fitted to a side of the case main body (30) so as to cover the opening (31) and disposed below the air cleaner (50); and
a lower edge of the duct unit (60) is located between the cover (40) and the case main body (30).

11. The scooter type motorcycle (1) according to claim 10, wherein the cover (40) has a wall disposed at a side of the transmission air intake port (74) and the engine air intake port (76).

12. The scooter type motorcycle (1) according to claim 1, wherein:
the air cleaner (50) comprises:
a first case (51) disposed above the transmission case (29), an interior of the first case (51) being divided into the transmission air intake chamber (71) and the engine air intake chamber (72) by the vertical wall (53); and
a second case (52) disposed above the engine case (19) and at a side of the first case (51) and detachably fitted to the first case (51), wherein
the transmission air intake port (74) and the engine air intake port (76) are formed in a lower portion of the first case (51); and
an air passage from the engine air intake chamber (72) to the discharge port (62a) is formed in the second case (52),
the air cleaner having a filter (37) interposed between the first case (51) and the second case (52), for cleaning air flowing from the engine air intake chamber (72) to the interior of the second case (52).

## Patentansprüche

1. Motorrad (1) vom Roller- Typ, aufweisend:
einen Karosserierahmen (2),
eine Motoreinheit (10), ein Motorgehäuse (19), das eine Kurbelwelle (12) unterbringt, ein Getriebegehäuse (29), das auf einer Seite des Motorgehäuses (19) angeordnet ist und eine obere Wand (29a) hat und eine Riemenkammer (75), gebildet darin ein stufenlos veränderbares Getriebe (20) vom Keilriemen- Typ, angeordnet in der Riemenkammer (75), wobei die Motoreinheit (10) durch den Karosserierahmen (2) schwenkbar gelagert ist,
eine Fahrzeugkarosserieabdeckung (4), von der zumindest ein Abschnitt auf einer Seite des Karosserierahmens (2) angeordnet ist, wobei die Fahrzeugkarosserieabdeckung (4) über dem Getriebegehäuse (29) angeordnet ist, wenn von einer Seite gesehen; und
ein Luftfilter (50), angeordnet über der Brennkraftmaschine (10) und im Verhältnis zu dem Karosserierahmen (2) mit der Motoreinheit (10) schwenkbar, wobei
das Getriebegehäuse (29) eine Kanaleinheit (60) hat, aufweisend einen stromabwärtigen Endabschnitt, der mit der Riemenkammer (75) verbindet, und einen stromaufwärtigen Endabschnitt, abgedeckt durch den Luftfilter (50), um mit dem Luftfilter (50) zu überlappen, wenn von einer Seite gesehen;
wobei der Luftfilter (50) einen vertikale Wand (53) hat zum Unterteilen eines Inneren des Luftfilters (50) in eine Getriebeluft- Einlasskammer (71), die den stromaufwärtigen Endabschnitt der Kanaleinheit (6) unterbringt, und eine Motorluft- Einlasskammer (72), weiter hinten angeordnet als die Getriebeluft- Einlasskammer (71), eine Getriebeluft- Einlassöffnung (74), die nach unten öffnet, gegenüber der oberen Wand (29) und die mit der Getriebeluft- Einlasskammer (71) in Verbindung ist, eine Motorluft- Einlassöffnung (76), die nach unten öffnet, gegenüber der oberen Wand (29a) des Getriebegehäuses (29) und die mit der Motorluft- Einlasskammer (72) in Verbindung ist; und eine Abgabeöffnung (61 a), die mit der Motorluft- Einlasskammer (72) zum Abgeben von Luft, zugeführt zu der Motoreinheit (10), in Verbindung ist; **gekennzeichnet durch**
zumindest eines von Motorgehäuse (19), Getriebegehäuse (29) oder Luftfilter (50) eine Labyrinth- Struktur (R₁, R₂, R₃, R₄) bildet, die einen mäandernden Kanal (101, 102, 103) auf einer Seite der Getriebeluft- Einlassöffnung (74) und / oder der Motorluft- Einlassöffnung (76) bildet.

2. Motorrad (1) vom Roller- Typ nach Anspruch 1, außerdem aufweisend:
ein Hinterrad (9), gelagert durch einen hinteren Abschnitt der Motoreinheit (10), und wobei:
die Labyrinth- Struktur (R₁) zwischen dem Hinterrad (9) und der Kanaleinheit (60) gebildet ist, wenn von hinten des Motorrades (1) gesehen;
und
ein Raum (97) zwischen dem Luftfilter (50) und dem Motorgehäuse (19) mit der Getriebeluft- Einlassöffnung (74) durch den mäandernden Kanal (102) Verbindung ist.

3. Motorrad (1) vom Roller- Typ nach Anspruch 1, außerdem aufweisend eine Rippe (92), seitwärts vorspringend von einem Abschnitt einer Seitenwand (30a) des Getriebegehäuses (29), die niedriger als die Getriebeluft- Einlassöffnung (74) ist.

4. Motorrad (1) vom Roller- Typ nach Anspruch 1, wobei der Luftfilter (50) und das Getriebegehäuse (29) voneinander vertikal vor der Kanaleinheit (60) beabstandet sind, so dass Luft von einem vorderen Abschnitt der Kanaleinheit (60) in Verbindung mit dem Fahren des Motorrades (1) vom Roller- Typ zugeführt werden kann.

5. Motorrad (1) vom Roller- Typ nach Anspruch 1, außerdem aufweisend eine Rippe (61), vorspringend nach vorn von einem Abschnitt einer vorderen Wand (30b) des Motorgehäuses (19) oder des Getriebegehäuses (29), die niedriger als die Getriebeluft- Einlassöffnung (74) ist.

6. Motorrad (1) vom Roller- Typ nach Anspruch 1, wobei der vordere Abschnitt der Kanaleinheit (60) von der inneren Oberfläche des Luftfilters (50) beabstandet ist; und
der vordere Abschnitt der Kanaleinheit (60) mit einem Flanschvorsprung (63A, 63B) versehen ist, der radial nach außen vorspringt.

7. Motorrad (1) vom Roller- Typ nach Anspruch 1, wobei zumindest ein Abschnitt eines Raumes zwischen dem Luftfilter (50) und dem Getriebegehäuse (29) durch ein poröses Material abgedichtet ist.

8. Motorrad (1) vom Roller- Typ nach Anspruch 1, außerdem aufweisend einen Ständer (83), der schwenkbar durch die Motoreinheit (10) abgestützt ist und zumindest ein Abschnitt dessen unter dem Luftfilter (50) angeordnet ist, wenn von einer Seite gesehen.

9. Motorrad (1) vom Roller- Typ nach Anspruch 1, außerdem aufweisend einen Filter (35B), vorgesehen an der Getriebeluft- Einlassöffnung (74).

10. Motorrad (1) vom Roller- Typ nach Anspruch 1, wobei:
das stufenlos veränderbare Getriebe (20) vom Keilriemen- Typ ein Lüfterrad zum Ansaugen von Luft von einer Seite hat;
das Getriebegehäuse (29) einen Gehäusehauptkörper (30) mit einer Öffnung (31) auf einer Seite des Lüfterrades hat und das das stufenlos veränderbare Getriebe (20) vom Keilriemen- Typ unterbringt, und eine Abdeckung (40), eingesetzt an einer Seite des Gehäusehauptkörpers (30) und um die Öffnung (31) abzudecken und unter dem Luftfilter (50) angeordnet; und
eine untere Kante der Kanaleinheit (60) zwischen der Abdeckung (40) und dem Gehäusehauptkörper (30) angeordnet ist.

11. Motorrad (1) vom Roller- Typ nach Anspruch 1, wobei die Abdeckung (40) eine Wand hat, angeordnet auf einer Seite der Getriebeluft- Einlassöffnung (74).

12. Motorrad (1) vom Roller- Typ nach Anspruch 1, wobei;
der Luftfilter (50) aufweist:
ein erstes Gehäuse (51), angeordnet über dem Getriebegehäuse (29), wobei ein Inneres des ersten Gehäuses (51) in die Getriebeluft- Einlasskammer (71) und die Getriebeluft- Einlasskammer (72) durch die vertikale Wand (53) unterteilt ist; und
ein zweites Gehäuse (52)angeordnet über dem Motorgehäuse (19) und auf einer Seite des ersten Gehäuses (50) und lösbar an das erste Gehäuse (50) angesetzt, wobei
die Getriebeluft- Einlassöffnung (74) und die Motorluft- Einlasskammer (76) in dem unteren Abschnitt des ersten Gehäuses (51) gebildet sind; und
ein Lufteinlasskanal von der Motorluft- Einlasskammer (72) zu der Abgabeöffnung (62e) in dem zweiten Gehäuse (52) gebildet ist,
der Luftfilter einen Filter (37) hat, zwischen das erste Gehäuse (51) und das zweite Gehäuse (52) eingesetzt zum Reinigen von Luft, die von der Motorluft-Einlasskammer (72) zu dem Inneren des zweiten Gehäuses (52) strömt.

## Revendications

1. Motocyclette de type scooter (1) () comprenant :
un cadre (2) ;
une unité de moteur (10) comprenant un carter de moteur (19) contenant un vilebrequin (12), un carter de transmission (29) étant disposé sur un côté du carter de moteur (19) et comportant une paroi supérieure (29a) et une chambre de courroie (75) formée à l'intérieur, une transmission continûment variable du type à courroie en V (20) disposée dans la chambre de courroie (75), l'unité de moteur (10) étant supportée de façon oscillante par le cadre (2) ;
un capot de cadre (4) dont au moins une partie est disposée sur un côté du cadre (2) le capot de cadre (4) étant situé au-dessus du carter de transmission (29) vu d'un côté ; et
un dispositif de nettoyage d'air (50) disposé au-dessus de l'unité de moteur (10) et pouvant osciller par rapport au cadre (2) en même temps que l'unité de moteur (10), dans laquelle
le carter de transmission (29) comporte une unité de conduite (60) comprenant une partie d'extrémité aval communiquant avec la chambre de courroie (75) et une partie d'extrémité amont recouverte par le dispositif de nettoyage d'air (50) de manière à recouvrir le dispositif de nettoyage d'air (50) vu d'un côté ;
le dispositif de nettoyage d'air (50) comporte :
une paroi verticale (53) pour diviser l'intérieur du dispositif de nettoyage d'air (50) en une chambre d'admission d'air de transmission (71) recevant la partie d'extrémité amont de l'unité de conduite (60) et une chambre d'admission d'air de moteur (72) située plus en arrière que la chambre d'admission d'air de transmission (71) ; un orifice d'admission d'air de transmission (74) s'ouvrant vers le bas, opposé à la paroi supérieure (29a) du carter de transmission (29) et communiquant avec la chambre d'admission d'air de transmission (71) ; un orifice d'admission d'air de moteur (76) s'ouvrant vers le bas, opposé à la paroi supérieure (29a) du carter de transmission (29) et communiquant avec la chambre d'admission d'air du moteur (72) ; et un orifice d'évacuation (69a) communiquant avec la chambre d'admission d'air du moteur (72) pour évacuer l'air fourni à l'unité de moteur (10) ; **caractérisée en ce que**
au moins un élément parmi le carter du moteur (19), le carter de transmission (29) et le dispositif de nettoyage d'air (50) forme une structure en labyrinthe (R₁, R₂, R₃, R₄) définissant un passage en méandres (101, 102, 103) sur un côté de l'orifice d'admission d'air de transmission (74) et/ou l'orifice d'admission d'air de moteur (76).

2. Motocyclette de type scooter (1) selon la revendication 1, comprenant en outre :
une roue arrière (9) supportée sur une partie arrière de l'unité de moteur (10), et dans laquelle :
la structure en labyrinthe (R₂) est formée entre la roue arrière (9) et l'unité de conduite (60), vue de l'arrière de la motocyclette (1) ; et
un espace (97) entre le dispositif de nettoyage d'air (50) et le carter du moteur (19) est en communication avec l'orifice d'admission d'air de transmission (74) à travers le passage en méandres (102).

3. Motocyclette de type scooter (1) selon' la revendication 1, comprenant en outre une arête (92) dépassant sur le côté d'une partie d'une paroi latérale (30a) du carter de transmission (29) qui est plus basse que l'orifice d'admission d'air de transmission (74).

4. Motocyclette de type scooter (1) selon la revendication 1, dans laquelle le dispositif de nettoyage d'air (50) et le carter de transmission (29) sont séparés verticalement l'un de l'autre devant l'unité de conduite (60) de sorte que de l'air peut être fourni depuis l'avant jusqu'à une partie avant de l'unité de conduite (60) en association avec l'avancement de la motocyclette de type scooter (1).

5. Motocyclette de type scooter (1) selon la revendication 1, comprenant en outre une arête (91) dépassant vers l'avant depuis une partie de la paroi avant (30b) du carter de moteur (19) ou du carter de transmission (29) qui est plus basse que l'orifice d'admission d'air de transmission (74).

6. Motocyclette de type scooter (1) selon la revendication 1, dans laquelle :
une partie avant de l'unité de conduite (60) est espacée de la surface intérieure du dispositif de nettoyage d'air (50) ; et
la partie avant de l'unité de conduite (60) est munie d'une bride (63A, 63B) dépassant radialement vers l'extérieur.

7. Motocyclette de type scooter (1) selon la revendication 1, dans laquelle au moins une partie de l'espace compris entre le dispositif de nettoyage d'air (50) et le carter de transmission (29) est scellée par un matériau poreux.

8. Motocyclette de type scooter (1) selon la revendication 1, comprenant en outre une béquille (83), soutenue de manière pivotante par l'unité de moteur (10) et dont au moins une partie est située au-dessous du dispositif de nettoyage d'air (50), vu d'un côté.

9. Motocyclette de type scooter (1) selon la revendication 1, comprenant en outre un filtre (35B) prévu au niveau de l'orifice d'admission d'air de transmission (74).

10. Motocyclette de type scooter (1) selon la revendication 1, dans laquelle :
la transmission continûment variable du type à courroie en V (20) comporte un ventilateur pour aspirer l'air depuis un côté ;
le carter de transmission (29) comporte un corps principal de boîte (30) ayant une ouverture située sur un côté du ventilateur et recevant la transmission continûment variable du type à courroie en V (20), et un capot (40) ajusté sur un côté du corps principal de boîte (30) de manière à recouvrir l'ouverture (31) et disposé au-dessous du dispositif de nettoyage d'air (50) ; et
le bord inférieur de l'unité de conduite (60) est situé entre le capot (40) et le corps principal de boîte (30).

11. Motocyclette de type scooter (1) selon la revendication 10, dans laquelle le capot (40) comporte une paroi disposée sur un côté de l'orifice d'admission d'air de transmission (74) et de l'orifice d'admission d'air de moteur (76).

12. Motocyclette de type scooter (1) selon la revendication 1, dans laquelle :
le dispositif de nettoyage d'air (50) comprend :
un premier carter (51) disposé au-dessus du carter de transmission (29), l'intérieur du premier carter (51) étant séparé par la paroi verticale (53) en chambre d'admission d'air de transmission (71) et chambre d'admission d'air du moteur (72) ; et
un second carter (52) disposé au-dessus du carter de moteur (19) et un côté du premier carter (51) et ajusté de manière amovible sur le premier carter (51), dans lequel
l'orifice d'admission d'air de transmission (74) et l'orifice d'admission d'air de moteur (76) sont formés dans une partie inférieure du premier carter (51) ; et
un passage d'air allant de la chambre d'admission d'air du moteur (72) à l'orifice d'évacuation (62a) est formé dans le second carter (52),
le dispositif de nettoyage d'air comportant un filtre (37) intercalé entre le premier carter (51) et le second carter (52), pour nettoyer l'écoulement d'air allant de la chambre d'admission d'air du moteur (72) à l'intérieur du second carter (52).
